# EUROPEAN PATENT APPLICATION

(11) **EP 4 815 121 A1**
(43) Date of publication of application: **30.09.2026**
(21) Application number: 24895381.2
(22) Date of filing: 15.04.2024
(51) Int. Cl.: H01M 50/103

(54) **BATTERY CELL, BATTERY AND ELECTRIC DEVICE**

(30) Priority: 29.11.2023 CN 202323248857 U
(71) Applicant: Contemporary Amperex Technology Co., Limited, Ningde, Fujian 352100 (CN)
(72) Inventor: NIU, Di, Ningde, Fujian 352100 (CN); BAI, Qinglin, Ningde, Fujian 352100 (CN); ZHANG, Zheng, Ningde, Fujian 352100 (CN); MENG, Hao, Ningde, Fujian 352100 (CN); GUO, Xin, Ningde, Fujian 352100 (CN)
(74) Representative: Ziebig Hengelhaupt Intellectual Property Attorneys Patentanwaltskanzlei PartGmbB
(86) International application number: PCT/CN2024/087820
(87) International publication number: WO 2025/112270

(57) **Abstract**

The present application discloses a battery cell, a battery, and an electric apparatus. The battery cell includes a housing, an electrode assembly, a current collector assembly, and an anti-oxidation layer. The housing has an accommodating cavity. The electrode assembly is disposed within the accommodating cavity. The current collector assembly is connected to the electrode assembly, and the current collector assembly is connected to a side of the housing facing the accommodating cavity. The anti-oxidation layer is disposed on a side of the housing facing away from the accommodating cavity, and an orthographic projection of the anti-oxidation layer on the housing at least partially overlaps with an orthographic projection of the current collector assembly on the housing. The current collector assembly is disposed in the housing and connected to the electrode assembly, and the electrode assembly is electrically connected to external devices to achieve power transmission. The anti-oxidation layer is disposed at a junction between the current collector assembly and the housing, which can reduce the risk of cracks or electrolyte leakage that could result from corrosion at the junction between the current collector assembly and the housing due to its contact with moisture and oxygen in the air, enhancing the overall structural strength of the housing, and improving the reliability of the operation of the battery cell.

## Description

### CROSS-REFERENCE TO RELATED APPLICATIONS

The present application claims priority to Chinese Patent Application No. 202323248857.9, filed on November 29, 2023, and entitled "BATTERY CELL, BATTERY, AND ELECTRIC APPARATUS", which is incorporated herein by reference in its entirety.

### TECHNICAL FIELD

The present application relates to the field of batteries, and in particular, to a battery cell, a battery, and an electric apparatus.

### BACKGROUND

Battery cells are widely used in electronic devices, such as mobile phones, notebook computers, electric bicycles, electric vehicles, electric airplanes, electric ships, electric toy cars, electric toy ships, electric toy airplanes, electric tools, and energy storage systems. Battery cells may include nickel-cadmium battery cells, nickel-hydrogen battery cells, lithium-ion battery cells, sodium-ion battery cells, and secondary alkaline zinc-manganese battery cells, and the like.

With the development of new energy technologies, how to improve the structural stability of a battery cell housing, thereby improving the reliability of a battery cell is one of the key research focuses in this field.

### SUMMARY

In view of the above issues, the present application provides a battery cell, a battery, and an electric apparatus capable of improving the structural stability of the battery cell housing, thereby enhancing the reliability of the battery cell.

According to a first aspect, the present application provides a battery cell including a housing, an electrode assembly, a current collector assembly, and an anti-oxidation layer. The housing has an accommodating cavity. The electrode assembly is disposed within the accommodating cavity. The current collector assembly is connected to the electrode assembly, and the current collector assembly is connected to a side of the housing facing the accommodating cavity. The anti-oxidation layer is disposed on a side of the housing facing away from the accommodating cavity, and an orthographic projection of the anti-oxidation layer on the housing at least partially overlaps with an orthographic projection of the current collector assembly on the housing.

In the technical solution of the embodiments of the present application, the current collector assembly is disposed in the housing and connected to the electrode assembly, the electrode assembly is electrically connected to external devices to achieve power transmission. The anti-oxidation layer is disposed at a junction between the current collector assembly and the housing, which can reduce the risk of cracks or electrolyte leakage that could result from corrosion at the junction between the current collector assembly and the housing due to its contact with moisture and oxygen in the air, enhancing the overall structural strength of the housing, and improving the reliability of the operation of the battery cell.

In some embodiments, the current collector assembly includes a current collection plate and a first weld portion. An edge of the current collection plate is connected to the side of the housing facing the accommodating cavity, and one side surface of the current collection plate is connected to a tab of the electrode assembly. The first weld portion is disposed between the current collection plate and the housing for connecting the current collection plate to the housing. The anti-oxidation layer includes a first protective layer, where an orthographic projection of the first protective layer on the housing completely covers an orthographic projection of the first weld portion on the housing. In the above structure, the current collection plate is configured to be welded to the electrode assembly, enhancing the connection strength between the electrode assembly and the current collector assembly. The first weld portion connects the current collection plate and the housing, enhancing the connection strength between the current collector assembly and the housing. The first protective layer covers the position where the first weld portion connects to the housing, reducing the probability of corrosion occurring at the first weld portion where the housing is in contact with moisture and oxygen in the air, and reducing the risk of the housing experiencing cracks or electrolyte leakage, enhancing the overall structural strength of the housing, and improving the reliability of the operation of the battery cell.

In some embodiments, the housing includes a housing body, an end cover, and a second weld portion. The housing body has an opening. The end cover covers the opening, and the end cover and the housing body together enclose the accommodating cavity. The second weld portion is disposed between the housing body and the end cover. The anti-oxidation layer includes a second protective layer, where an orthographic projection of the second protective layer on the housing completely covers an orthographic projection of the second weld portion on the housing.

In the above structure, the second weld portion connects the end cover to the housing body, enhancing the connection strength between the end cover and the housing body. The second protective layer covers the position where the second weld portion connects to the housing, reducing the probability of corrosion occurring at the second weld portion where the housing is in contact with moisture and oxygen in the air, and reducing the risk of the housing experiencing cracks or electrolyte leakage, enhancing the overall structural strength of the housing, and improving the reliability of the operation of the battery cell.

In some embodiments, the first protective layer and the second protective layer are integrally formed structures. In the above technical solution, the integral structure improves the manufacturing efficiency of the anti-oxidation layer and enhances the overall structural strength of the housing.

In some embodiments, the battery cell further includes an anti-corrosion layer disposed on the side of the housing facing away from the accommodating cavity. The anti-corrosion layer has a notch at a position corresponding to the first weld portion or the second weld portion, and the anti-oxidation layer covers at least a portion of the notch.

In the above structure, the anti-corrosion layer can enhance the overall structural strength and corrosion resistance of the housing. Disposing the anti-oxidation layer at the position where the anti-corrosion layer has an opening defect can reduce the probability of corrosion occurring at the exposed housing at the notch of the anti-corrosion layer due to its contact with moisture and oxygen in the air, thereby reducing the risk of the housing experiencing cracks or electrolyte leakage, enhancing the overall structural strength of the housing, and improving the reliability of the operation of the battery cell.

In some embodiments, the anti-corrosion layer includes a nickel layer, and the housing is a steel housing or a carbon steel housing. In the above structure, using nickel-plated steel or nickel-plated carbon steel to manufacture the housing can enhance the overall structural strength of the housing and provide good electrical conductivity. The nickel coating is dense with low porosity, which can enhance the strength, hardness, and corrosion resistance of the steel or carbon steel.

In some embodiments, the anti-oxidation layer includes at least one of a polyacrylate layer, a polyurethane layer, and an epoxy resin layer. In the above structure, the anti-oxidation layer has high connection strength with the housing, strong corrosion resistance, and is compatible with various coating processes, improving manufacturing efficiency.

In some embodiments, the side of the housing facing away from the accommodating cavity is further provided with an insulating layer. A surface of the housing facing the insulating layer is recessed to form an accommodating groove, and at least a portion of the anti-oxidation layer is disposed in the accommodating groove. In the above structure, providing the insulating layer improves the insulation performance of the housing, enhancing the safety of the battery cell during operation. Additionally, providing the accommodating groove on a surface of the housing to accommodate the anti-oxidation layer can reduce the thickness of the anti-oxidation layer protruding from the housing surface, minimizing the space occupied by the anti-oxidation layer, improving the surface flatness of the battery cell, and increasing the energy density of the battery cell.

According to a second aspect, the present application provides a battery including the battery cell described in the above embodiments.

According to a third aspect, the present application provides an electric apparatus including the battery described in the above embodiments, where the battery is configured to supply electrical energy.

The foregoing descriptions are merely an overview of the technical solutions of the present application. For a better understanding of the technical means in the present application such that they can be implemented according to the content of the specification, and to make the above and other objectives, features and advantages of the present application more obvious and easier to understand, the following describes specific embodiments of the present application.

### BRIEF DESCRIPTION OF DRAWINGS

The following describes features, advantages, and technical effects of the example embodiments of the present application with reference to the accompanying drawings.
FIG. 1 is a schematic structural diagram of a vehicle according to an embodiment of the present application;
FIG. 2 is a schematic structural exploded view of a battery according to an embodiment of the present application;
FIG. 3 is a schematic structural diagram of a battery cell according to an embodiment of the present application;
FIG. 4 is a schematic structural diagram of a battery cell according to another embodiment of the present application;
FIG. 5 is an enlarged schematic structural diagram of circle A in FIG. 4;
FIG. 6 is a schematic structural diagram of a battery cell according to still another embodiment of the present application;
FIG. 7 is an enlarged schematic structural diagram of circle B in FIG. 6;
FIG. 8 is a schematic structural diagram of a battery cell according to still another embodiment of the present application;
FIG. 9 is an enlarged schematic structural diagram of circle C in FIG. 8;
FIG. 10 is a schematic structural diagram of a battery cell according to still another embodiment of the present application; and
FIG. 11 is an enlarged schematic structural diagram of circle D in FIG. 10.

Description of Reference Signs
1. vehicle; 2. battery; 10. electrode assembly; 20. housing body; 22. insulating layer; 23. accommodating groove; 24. upper fluid collecting member; 25. electrode terminal; 26. lower fluid collecting member; 30. end cover; 40. housing; 3. controller; 4. motor; 5. box; 51. first portion; 52. second portion; 53. accommodating space; 6. current collector assembly; 601. current collection plate; 602. first weld portion; 603. second weld portion; 7. battery cell; 8. anti-oxidation layer; 801. first protective layer; and 802. second protective layer.

### DESCRIPTION OF EMBODIMENTS

The following describes in detail some embodiments of technical solutions of the present application with reference to the accompanying drawings. The following embodiments are merely intended for a clearer description of the technical solutions of the present application and therefore are used as just examples which do not constitute any limitation on the protection scope of the present application.

Unless otherwise defined, all technical and scientific terms used herein shall have the same meanings as commonly understood by persons skilled in the art to which the present application relates. The terms used herein are intended to merely describe the specific embodiments rather than to limit the present application. The terms "include", "comprise", and "have" and any other variations thereof in the specification, claims and brief description of drawings of the present application are intended to cover non-exclusive inclusions.

In the descriptions of the embodiments of the present application, the technical terms "first", "second", and the like are merely intended to distinguish between different objects, and shall not be understood as any indication or implication of relative importance or any implicit indication of the number, specific sequence, or primary-secondary relationship of the technical features indicated. In the description of the embodiments of the present application, "a plurality of" means at least two unless otherwise specifically defined.

In this specification, reference to "embodiment" means that specific features, structures, or characteristics described with reference to the embodiment may be included in at least one embodiment of the present application. The term "embodiment" appearing in various places in the specification does not necessarily refer to the same embodiment or an independent or alternative embodiment that is exclusive of other embodiments. It is explicitly or implicitly understood by persons skilled in the art the embodiments described herein may be combined with other embodiments.

In the description of some embodiments of the present application, the term "and/or" is only an associative relationship for describing associated objects, indicating that three relationships may be present. For example, A and/or B may indicate the following three cases: presence of only A, presence of both A and B, and presence of only B. In addition, the character "/" in this specification generally indicates an "or" relationship between the contextually associated objects.

In the descriptions of the embodiments of the present application, the term "multiple" means more than two (inclusive). Similarly, "multiple groups" means more than two (inclusive) groups, and "multiple pieces" means more than two (inclusive) pieces.

In the description of the embodiments of the present application, the orientations or positional relationships indicated by the technical terms "center", "longitudinal", "transverse", "length", "width", "thickness", "upper", "lower", "front", "rear", "left", "right", "vertical", "horizontal", "top", "bottom", "inside", "outside", "clockwise", "counterclockwise", "axial", " radial", "circumferential", and the like are based on the orientations or positional relationships as shown in the accompanying drawings. These terms are merely for ease and brevity of description of the embodiments of the present application rather than indicating or implying that the means or components mentioned must have specific orientations or must be constructed or manipulated according to specific orientations, and therefore shall not be construed as any limitation on the embodiments of the present application.

In the description of the embodiments of the present application, unless otherwise specified and defined explicitly, the terms "mounting", "connection", "join", and "fastening" should be understood in their general senses. For example, they may refer to a fixed connection, a detachable connection, or an integral connection, may refer to a mechanical connection or electrical connection, and may refer to a direct connection, an indirect connection via an intermediate medium, an internal communication between two elements, or an interaction between two elements. Persons of ordinary skills in the art can understand specific meanings of these terms in the present application as appropriate to specific situations.

An embodiment of the present application provides an electric apparatus that uses a battery as a power source. The electric apparatus may be but is not limited to a mobile phone, a tablet, a notebook computer, an electric toy, an electric tool, an electric bicycle, an electric car, a ship, and a spacecraft. The electric toy may include a fixed or mobile electric toy, for example, a game console, an electric toy car, an electric toy ship, and an electric toy aircraft. The spacecraft may include an aircraft, a rocket, a space shuttle, and a spaceship.

For ease of description, an electric apparatus according to an embodiment of the present application being a vehicle is used as an example for description of the following embodiments.

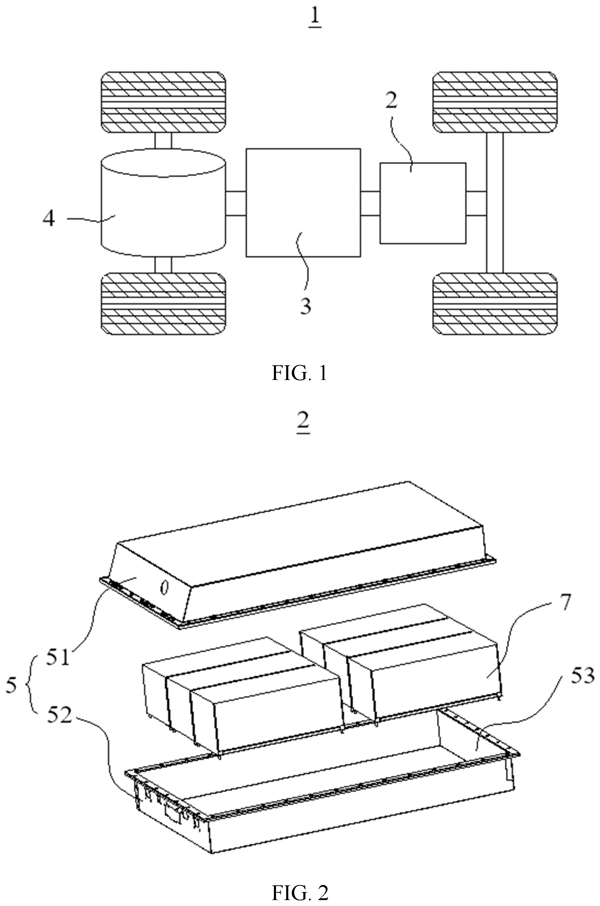

Referring to FIG. 1, FIG. 1 is a schematic structural diagram of a vehicle provided by some embodiments of the present application. The vehicle 1 may be a fossil fuel vehicle, a natural-gas vehicle, or a new energy vehicle, where the new energy vehicle may be a battery electric vehicle, a hybrid electric vehicle, a range-extended vehicle, or the like. The vehicle 1 is provided with a battery 2 inside, where the battery 2 may be disposed at the bottom, front, or rear of the vehicle 1. The battery 2 may be configured to supply power to the vehicle 1. For example, the battery 2 may be used as an operational power source for the vehicle 1. The vehicle 1 may further include a controller 3 and a motor 4, where the controller 3 is configured to control the battery 2 to supply power to the motor 4. For example, to satisfy power needs of start, navigation, and driving of the vehicle 1.

In some embodiments of the present application, the battery 2 can be used as not only the operational power source for the vehicle 1 but also a driving power source for the vehicle 1, replacing or partially replacing fossil fuel or natural gas to provide driving traction for the vehicle 1.

In some embodiments, the battery may be an energy storage apparatus. The energy storage apparatus includes an energy storage container, an energy storage cabinet, and the like.

Referring to FIG. 2, FIG. 2 is an exploded view of a battery provided by some embodiments of the present application. The battery 2 includes a box 5 and battery cells 7, where the battery cells 7 are accommodated in the box 5. The box 5 is configured to provide an accommodating space for the battery cells 7. The box 5 may be a variety of structures.

In some optional embodiments, the box 5 includes a first portion 51 and a second portion 52. The first portion 51 and the second portion 52 fit together so that the first portion 51 and the second portion 52 jointly define an accommodating space 53 for accommodating the battery cells 7. The second portion 52 may be a hollow structure with an opening at one end, the first portion 51 may be a plate-shaped structure, and the first portion 51 covers an opening side of the second portion 52, so that the first portion 51 and the second portion 52 jointly define the accommodating space 53. Alternatively, both the first portion 51 and the second portion 52 may be hollow structures with an opening at one side, and the opening side of the first portion 51 covers the opening side of the second portion 52. Certainly, the box 5 formed by the first portion 51 and the second portion 52 may be of various shapes, for example, cylinder or cuboid.

In some embodiments, the box 5 may be used as part of the chassis structure of the vehicle 1. For example, part of the box 5 may become at least part of the chassis of the vehicle 1, or part of the box 5 may become at least parts of a cross beam and longitudinal beam of the vehicle 1.

In the battery 2, the battery cell 7 may be provided in plurality, and the plurality of battery cells 7 may be connected in series, parallel, or series-parallel, where being connected in series-parallel means a combination of series and parallel connections of the plurality of battery cells 7. The plurality of battery cells 7 may be directly connected in series, parallel, or series-parallel, and then an entirety of the plurality of battery cells 7 is accommodated in the box 5. Certainly, the battery 2 may be formed by a plurality of battery cells 7 being connected in series, parallel, or series-parallel first to form a battery module and then a plurality of battery modules being connected in series, parallel, or series-parallel to form an entirety which is accommodated in the box 5. The battery 2 may further include other structures. For example, the battery 2 may further include a busbar configured to implement electrical connection between the plurality of battery cells 7.

Each battery cell 7 may be a secondary battery or a primary battery, or may be a lithium-sulfur battery, a sodium-ion battery, or a magnesium-ion battery, without being limited thereto. The battery cell 7 may be cylindrical, flat, cuboid, or of other shapes.

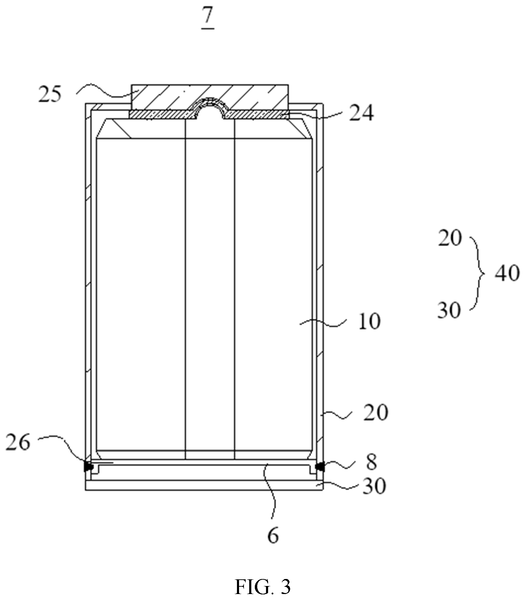

Referring to FIG. 3, FIG. 3 is a schematic structural diagram of a battery cell 7 provided by some embodiments of the present application. The battery cell 7 is the smallest element constituting the battery 2. As shown in FIG. 3, the battery cell 7 includes a housing 40, an electrode assembly 10, and other functional components.

The housing 40 may include an end cover 30 and a housing body 20. The end cover 30 refers to a component that covers an opening of the housing body 20 to isolate an internal environment of the battery cell 7 from an external environment. Without limitation, a shape of the end cover 30 may fit with that of the housing body 20 to fit the housing body 20. Optionally, the end cover 30 may be made of a material with specified hardness and strength (for example, aluminum alloy), so that the end cover 30 is not prone to deform when subjected to compression and collision, allowing the battery cell 7 to have higher structural strength and improved safety performance. Functional components such as an electrode terminal 25 may be provided on the end cover 30. The electrode terminal 25 may be configured to be electrically connected to the electrode assembly 10 for outputting or inputting electrical energy of the battery cell 7.

In some embodiments, the end cover 30 may further be provided with a pressure relief mechanism configured to relieve internal pressure when the internal pressure or temperature of the battery cell 7 reaches a threshold. The end cover 30 may also be made of various materials, such as copper, iron, aluminum, stainless steel, aluminum alloy, and plastic. This is not particularly limited in the embodiments of the present application. In some embodiments, an insulator may also be disposed on an inner side of the end cover 30. The insulator may be configured to isolate an electrically connected component in the housing body 20 from the end cover 30 to reduce a risk of short circuit. For example, the insulation part may be made of plastic, rubber, or the like.

The housing body 20 is an assembly configured to form the internal environment of the battery cell 7 together with the end cover 30, where the formed internal environment may be used to accommodate the electrode assembly 10, the electrolyte, and other components. The housing body 20 and the end cover 30 may be independent components, an opening may be provided in the housing body 20, and the end cover 30 covers the opening to form the internal environment of the battery cell 7. Without limitation, the end cover 30 and the housing body 20 may alternatively be integrated. Specifically, the end cover 30 and the housing body 20 may form a shared connection surface before other components are placed inside the housing, and then the end cover 30 covers the housing body 20 when inside of the housing body 20 needs to be enclosed. The housing body 20 may be of various shapes and sizes, such as a cuboid shape, a cylindrical shape, and a hexagonal prism shape. Specifically, the shape of the housing body 20 may be determined according to a specific shape and size of the electrode assembly 10. The housing body 20 may be made of various materials, such as copper, iron, aluminum, stainless steel, aluminum alloy, and plastic. This is not particularly limited in the embodiments of the present application.

The electrode assembly 10 is a component in which electrochemical reactions take place in the battery cell 7. One or more electrode assemblies 10 may be disposed in the housing body 20. The electrode assembly 10 includes a positive electrode, a negative electrode, and a separator. During charge and discharge process of the battery cell 7, active ions (for example, lithium ions) are intercalated and deintercalated between the positive electrode and the negative electrode. The separator is arranged between the positive electrode and the negative electrode to prevent short circuit of the positive electrode and negative electrode and to allow the active ions to pass through.

In some embodiments, the separator is an isolating film. The isolating film is not limited to any particular type in the present application and may be any well-known porous isolating film with good chemical stability and mechanical stability. For example, major materials of the isolating film may be selected from at least one of glass fiber, non-woven fabric, polyethylene, polypropylene, polyvinylidene fluoride, or ceramics.

In some embodiments, the separator is a solid-state electrolyte. The solid-state electrolyte is disposed between the positive electrode and the negative electrode, and simultaneously conducts ions and isolates the positive electrode and negative electrode.

In some embodiments, the battery cell 7 further includes an electrolyte, and the electrolyte conducts ions between the positive electrode and the negative electrode. The electrolyte is not specifically limited in the present application, and may be selected as required. The electrolyte in a liquid state, a gel state, or a solid-state.

In some embodiments, the electrode assembly 10 is a wound structure. Optionally, the electrode assembly 10 is a laminated structure.

In some embodiments, the shape of the electrode assembly 10 may be cylindrical, flat, or prismatic, or the like.

In some embodiments, the electrode assembly 10 is provided with tabs, and the tabs can conduct current from the electrode assembly 10. The tabs include a positive tab and a negative tab.

In some embodiments, the battery cell 7 includes a current collector assembly, where the current collector assembly is configured to connect the electrode assembly 10 to the housing body 20. The current collector assembly includes an upper fluid collecting member 24 and a lower fluid collecting member 26. One side of the upper fluid collecting member 24 is connected to one tab of the electrode assembly 10, and the other side is welded to the electrode terminal 25. One side of the lower fluid collecting member 26 is connected to the other tab of the electrode assembly 10, and the circumference of the lower fluid collecting member 26 is connected to an inner wall of the housing body 20.

With the development of battery technology, the structural stability of the housing of the battery cell has received attention. During the operation of the battery cell, heat is generated, and a metal housing, under high-temperature conditions, is prone to oxidation reactions with oxygen and moisture in the air, leading to oxidation and corrosion of the housing. Therefore, an anti-corrosion coating is typically applied to the surface thereof before the housing leaves factory, where the anti-corrosion coating is applied using spraying or electroplating processes.

The lower fluid collecting member in the battery is typically connected to the housing by welding. For example, heating may be applied at the connection position between the lower fluid collecting member and the housing, causing a portion of the lower fluid collecting member to melt and connect to the housing, leading to a firm connection between the lower fluid collecting member and the housing after cooling. However, the heating process can damage the anti-oxidation coating on the exterior of the housing. Therefore, the anti-oxidation coating forms a notch at the connection position between the lower fluid collecting member and the housing, exposing the metal housing to oxidation reactions with oxygen and moisture in the air, leading to oxidation and corrosion of the housing. In a corroded region, the housing may crack or leak electrolyte, reducing the safety of the battery cell during operation, and shortening service life.

Based on the above considerations, the present application provides a battery cell including a housing, an electrode assembly, a current collector assembly, and an anti-oxidation layer. The housing has an accommodating cavity. The electrode assembly is disposed within the accommodating cavity. The current collector assembly is connected to the electrode assembly, and the current collector assembly is connected to a side of the housing facing the accommodating cavity. The anti-oxidation layer is disposed on a side of the housing facing away from the accommodating cavity, where an orthographic projection of the anti-oxidation layer on the housing at least partially overlaps with an orthographic projection of the current collector assembly on the housing.

In the technical solution of the embodiments of the present application, the current collector assembly is disposed in the housing and connected to the electrode assembly, and the electrode assembly is electrically connected to other components to achieve power transmission. The anti-oxidation layer is disposed at a junction between` the current collector assembly and the housing, which can reduce the risk of cracks or electrolyte leakage that could result from corrosion at the junction between the current collector assembly and the housing due to its contact with moisture and oxygen in the air, enhancing the overall structural strength of the housing, and improving the reliability of the operation of the battery cell.

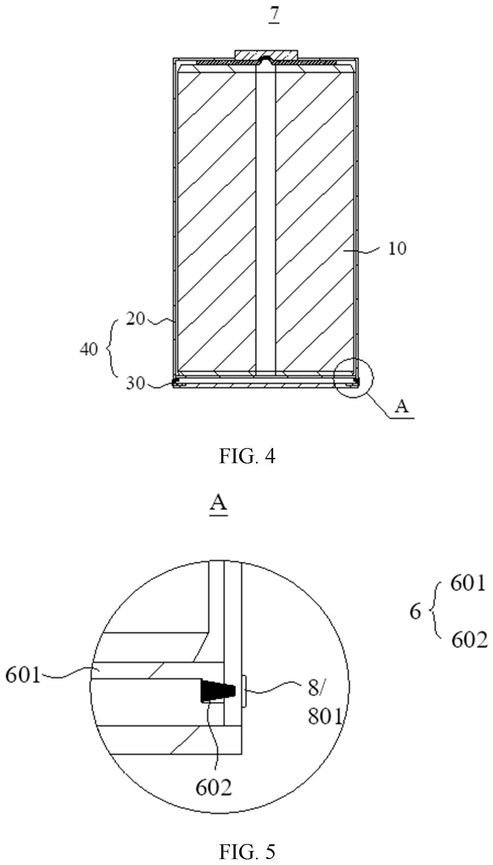

As shown in FIG. 4 and FIG. 5, in some embodiments of the present application, the current collector assembly 6 includes a current collection plate 601 and a first weld portion 602. An edge of the current collection plate 601 is connected to a side of the housing 40 facing the accommodating cavity, and one side surface of the current collection plate 601 is connected to a tab of the electrode assembly 10. The first weld portion 602 is disposed between the current collection plate 601 and the housing 40 for connecting the current collection plate 601 to the housing 40. The anti-oxidation layer 8 includes a first protective layer 801, where an orthographic projection of the first protective layer 801 on the housing 40 completely covers an orthographic projection of the first weld portion 602 on the housing 40.

For example, the first weld portion 602 may be formed by melting the metal at the edge of the current collector assembly 6 at high temperature and then cooling the same to shape, or the first weld portion 602 may be formed by melting a solder at high temperature and the cooling the same to shape. The shape of the current collection plate 601 may match the shape of the end cover 30, and the edge of the current collection plate 601 abuts against or fits with an inner wall of the housing 40. The orthographic projection of the first protective layer 801 on the housing 40 completely covering the orthographic projection of the first weld portion 602 on the housing 40 means that the orthographic projection of the first protective layer 801 on the housing 40 completely overlaps with the orthographic projection of the first weld portion 602 on the housing 40, or that an area of the orthographic projection of the first protective layer 801 on the housing 40 is larger than the orthographic projection of the first weld portion 602 on the housing 40.

In the above structure, the current collection plate 601 is configured to be welded to the electrode assembly 10, enhancing the connection strength between the electrode assembly 10 and the current collector assembly 6. The first weld portion 602 connects the current collection plate 601 to the housing 40, enhancing the connection strength between the current collector assembly 6 and the housing 40. The first protective layer 801 covers the position where the first weld portion 602 connects to the housing 40, reducing the probability of corrosion occurring at the first weld portion 602 where the housing 40 is in contact with moisture and oxygen in the air, and reducing the risk of the housing 40 experiencing cracks or electrolyte leakage, enhancing the overall structural strength of the housing 40, and improving the reliability of the operation of the battery cell 7.

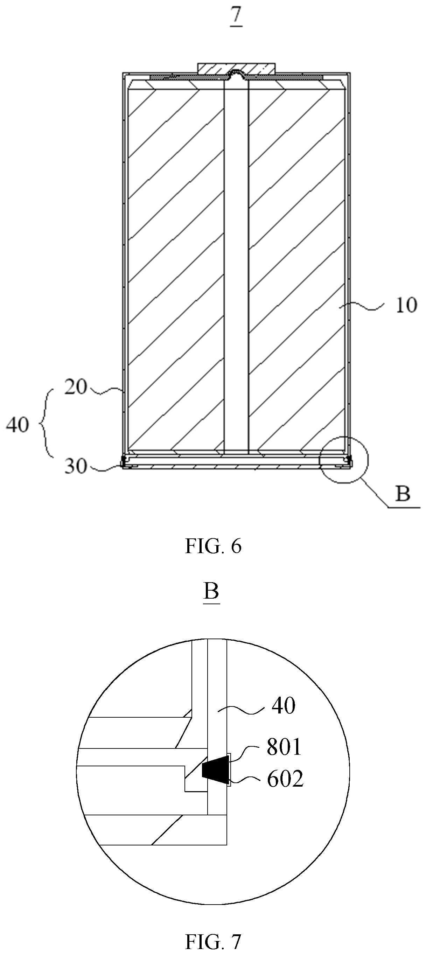

As shown in FIG. 6 and FIG. 7, in some optional embodiments, the first weld portion 602 may penetrate the housing 40 and extend to a side of the housing 40 facing away from the accommodating cavity. In the above structure, the first weld portion 602 penetrating the housing 40 can enhance the connection strength between the current collection plate 601 and the housing 40.

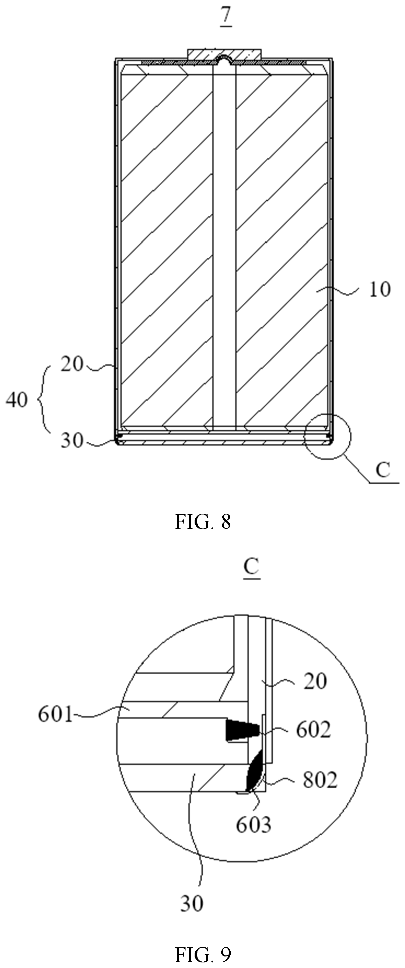

As shown in FIG. 8 and FIG. 9, in some embodiments of the present application, the housing 40 includes a housing body 20, an end cover 30, and a second weld portion 603. The housing body 20 has an opening. The end cover 30 covers the opening, and the end cover 30 and the housing body 20 together enclose the accommodating cavity. The second weld portion 603 is disposed between the housing body 20 and the end cover 30. The anti-oxidation layer 8 includes a second protective layer 802, where an orthographic projection of the second protective layer 802 on the housing 40 completely covers an orthographic projection of the second weld portion 603 on the housing 40.

In the above structure, the second weld portion 603 connects the end cover 30 to the housing body 20, enhancing the connection strength between the end cover 30 and the housing body 20. The second protective layer 802 covers the position where the second weld portion 603 connects to the housing 40, reducing the probability of corrosion occurring at the second weld portion 603 where the housing 40 is in contact with moisture and oxygen in the air, and reducing the risk of the housing 40 experiencing cracks or electrolyte leakage, enhancing the overall structural strength of the housing 40, and improving the reliability of the operation of the battery cell 7.

In some embodiments of the present application, the first protective layer 801 and the second protective layer 802 are integrally formed structures. In the above technical solution, the first protective layer 801 and the second protective layer 802 are connected as an integral structure, improving the manufacturing efficiency of the anti-oxidation layer 8 and enhancing the overall structural strength of the housing 40.

In some embodiments of the present application, the battery cell 7 further includes an anti-corrosion layer disposed on the side of the housing 40 facing away from the accommodating cavity. The anti-corrosion layer has a notch at a position corresponding to the first weld portion 602 or the second weld portion 603, and the anti-oxidation layer 8 covers at least a portion of the notch.

For example, the anti-corrosion coating is directly sprayed or electroplated onto the surface of the metal housing 40 before the housing leaves factory to protect the metal housing 40, preventing oxidation while enhancing the surface strength thereof. However, during the manufacturing process of the battery cell 7, the positions of the first weld portion 602 and the second weld portion 603 need to be heated to connect the housing body 20 to the current collection plate 601 and the end cover 30, and the anti-corrosion layer at these positions is damaged by high temperatures, forming notches. Therefore, the anti-oxidation layer 8 may be disposed at these positions. Optionally, during the manufacturing process of the housing body 20, the housing body 20 may also experience scratches or collisions that may damage the anti-corrosion layer, forming notches, and the anti-oxidation layer 8 may alternatively be disposed at these positions. It can be understood that the thickness of the anti-corrosion layer at the notch is less than the thickness of the anti-corrosion layer in other regions of the housing body 20. Disposing the anti-oxidation layer 8 at these positions can reduce the probability of corrosion of the metal housing body 20 at the notch, enhancing the overall structural strength of the housing body 20.

In the above structure, the anti-corrosion layer can enhance the overall structural strength and corrosion resistance of the housing 40. Disposing the anti-oxidation layer 8 at the position where the anti-corrosion layer has a defect can reduce the probability of corrosion occurring at the exposed housing 40 at the notch of the anti-corrosion layer due to its contact with moisture and oxygen in the air, reducing the risk of the housing 40 experiencing cracks or electrolyte leakage, enhancing the overall structural strength of the housing 40, and improving the reliability of the operation of the battery cell 7.

For example, the shape of the anti-oxidation layer 8 may completely match the shape of the notch. Optionally, an area of the anti-oxidation layer 8 is larger than an area of the notch, and the edge of the anti-oxidation layer 8 forms a closed curve that completely surrounds the notch. For example, the minimum distance between the edge of the anti-oxidation layer 8 and the edge of the notch is 0.1 mm.

In some embodiments of the present application, the anti-corrosion layer includes a nickel layer, and the housing 40 is a steel housing 40 or a carbon steel housing 40. For example, the thickness of the anti-corrosion layer is 0.1 µm to 5 µm. The above thickness range enhances the anti-corrosion effect while minimizing the overall thickness and weight of the housing body 20.

In the above structure, the nickel coating is dense with low porosity, which can improve the strength, hardness, and corrosion resistance of steel or carbon steel. Using nickel-plated steel or nickel-plated carbon steel to manufacture the housing 40 can enhance the overall structural strength of the housing 40 and provide good electrical conductivity.

In some embodiments of the present application, the anti-oxidation layer 8 includes at least one of a polyacrylate layer, a polyurethane layer, and an epoxy resin layer. For example, the thickness range of the anti-oxidation layer 8 is 10 µm to 50 µm. The above thickness range ensures the anti-oxidation performance at the welded positions of the housing body 20 while minimizing the overall thickness and weight of the housing body 20.

In the above structure, the anti-oxidation layer 8 is made of organic materials with a viscosity in the range of 1 to 1000 cps. This configuration provides a high connection strength with the metal housing 40 and strong corrosion resistance, and is compatible with various coating processes, providing high manufacturing efficiency.

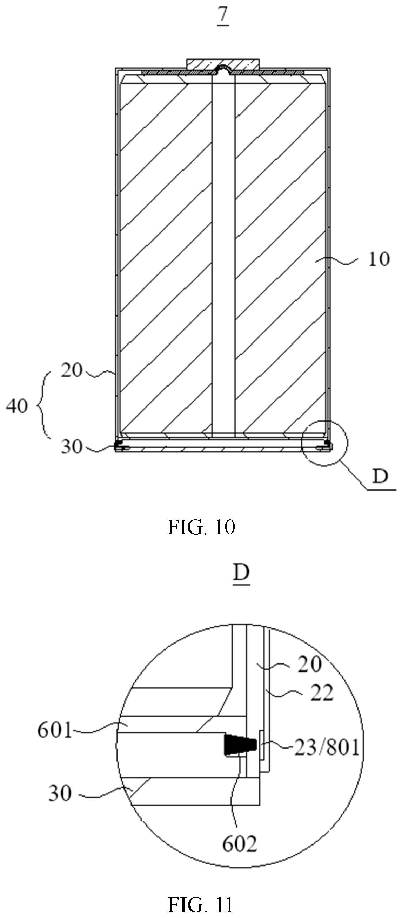

As shown in FIG. 10 and FIG. 11, in some embodiments of the present application, the side of the housing 40 facing away from the accommodating cavity is further provided with an insulating layer 22. A surface of the housing 40 facing the insulating layer 22 is recessed to form an accommodating groove 23, and at least a portion of the anti-oxidation layer 8 is disposed in the accommodating groove 23. In the above structure, providing the insulating layer 22 improves the insulation performance of the housing 40, enhancing the safety of the battery cell 7 during operation. Additionally, providing the accommodating groove 23 on the surface of the housing 40 to accommodate the anti-oxidation layer 8 can reduce the thickness of the anti-oxidation layer 8 protruding from the surface of the housing 40, minimizing the space occupied by the anti-oxidation layer 8, improving the surface flatness of the battery cell 7, and increasing the energy density of the battery cell 7.

The embodiments of the present application provide a battery 2 including the battery cell 7 described in the above embodiments. The embodiments of the present application also provide an electric apparatus including the battery 2 described in the above embodiments, where the battery 2 is configured to supply electrical energy. The battery 2 and the electric apparatus in the embodiments of the present application both include the battery cell 7 described in the above embodiments. In the battery cell 7, the current collector assembly 6 is disposed in the housing 40 and connected to the electrode assembly 10, the electrode assembly 10 is electrically connected to other components to achieve power transmission. The anti-oxidation layer 8 is disposed at the junction between the current collector assembly 6 and the housing 40, which can reduce the risk of cracks or electrolyte leakage that could result from corrosion at the junction between the current collector assembly 6 and the housing 40 due to its contact with moisture and oxygen in the air, enhancing the overall structural strength of the housing 40, and improving the reliability of the operation of the battery cell 7.

In conclusion, it should be noted that the foregoing embodiments are merely for describing the technical solutions of the present application rather than for limiting the present application. Although the present application has been described in detail with reference to the foregoing embodiments, persons of ordinary skill in the art should appreciate that they can still make modifications to the technical solutions described in the embodiments or make equivalent replacements to some or all technical features thereof without departing from the scope of the technical solutions of the embodiments of the present application. All such modifications and equivalent replacements shall fall within the scope of claims and specification of the present application. In particular, as long as there is no structural conflict, the various technical features mentioned in the embodiments can be combined in any manner. The present application is not limited to the specific embodiments disclosed in this specification, but includes all technical solutions falling within the scope of the claims.

## Claims

1. A battery cell (7), comprising:
a housing (40), having an accommodating cavity;
an electrode assembly (10), disposed within the accommodating cavity;
a current collector assembly (6), wherein the current collector assembly (6) is connected to the electrode assembly (10), and the current collector assembly (6) is connected to a side of the housing (40) facing the accommodating cavity; and
an anti-oxidation layer (8), disposed on a side of the housing (40) facing away from the accommodating cavity, wherein an orthographic projection of the anti-oxidation layer (8) on the housing (40) at least partially overlaps with an orthographic projection of the current collector assembly (6) on the housing (40).

2. The battery cell (7) according to claim 1, wherein the current collector assembly (6) comprises:
a current collection plate (601), wherein an edge of the current collection plate (601) is connected to the side of the housing (40) facing the accommodating cavity, and one side surface of the current collection plate (601) is connected to a tab of the electrode assembly (10); and
a first weld portion (602), disposed between the current collection plate (601) and the housing (40) for connecting the current collection plate (601) to the housing (40),
wherein the anti-oxidation layer (8) comprises a first protective layer (801), and an orthographic projection of the first protective layer (801) on the housing (40) completely covers an orthographic projection of the first weld portion (602) on the housing (40).

3. The battery cell (7) according to claim 2, wherein the housing (40) comprises:
a housing body (20), having an opening;
an end cover (30), covering the opening, the end cover (30) and the housing body (20) together enclosing the accommodating cavity; and
a second weld portion (603), disposed between the housing body (20) and the end cover (30),
wherein the anti-oxidation layer (8) comprises a second protective layer (802), and an orthographic projection of the second protective layer (802) on the housing (40) completely covers an orthographic projection of the second weld portion (603) on the housing (40).

4. The battery cell (7) according to claim 3, wherein the first protective layer (801) and the second protective layer (802) are integrally formed structures.

5. The battery cell (7) according to claim 3, wherein the battery cell (7) further comprises an anti-corrosion layer disposed on the side of the housing (40) facing away from the accommodating cavity, the anti-corrosion layer having a notch at a position corresponding to the first weld portion (602) or the second weld portion (603), and the anti-oxidation layer (8) covering at least a portion of the notch.

6. The battery cell (7) according to claim 5, wherein the anti-corrosion layer comprises a nickel layer, and the housing (40) is a steel housing (40) or a carbon steel housing (40).

7. The battery cell (7) according to any one of claims 1 to 6, wherein the anti-oxidation layer (8) comprises at least one of a polyacrylate layer, a polyurethane layer, and an epoxy resin layer.

8. The battery cell (7) according to any one of claims 1 to 6, wherein the side of the housing (40) facing away from the accommodating cavity is further provided with an insulating layer (22), a surface of the housing (40) facing the insulating layer (22) is recessed to form an accommodating groove (23), and at least a portion of the anti-oxidation layer (8) is disposed in the accommodating groove (23).

9. A battery (2), comprising the battery cell (7) according to any one of claims 1 to 8.

10. An electric apparatus, comprising the battery (2) according to claim 9, wherein the battery (2) is configured to supply electrical energy.
